# EUROPÄISCHE PATENTSCHRIFT

(11) **EP 1 654 089 B1**
(45) Veröffentlichungstag und Bekanntmachung des Hinweises auf die Patenterteilung: **27.02.2008**
(21) Anmeldenummer: 04762501.7
(22) Anmeldetag: 23.07.2004
(51) Int. Cl.: B23K 11/00, B23K 11/26, F01D 5/30

(54) **VERFAHREN ZUR HERSTELLUNG VON GASTURBINENROTOREN MIT INTEGRALER BESCHAUFELUNG DURCH KONDENSATORENTLADUNGSSCHWEISSEN**
METHOD FOR PRODUCING INTEGRATED BLADE ROTORS FOR A GAS TURBINE MOUNTED BY CAPACITOR DISCHARGE WELDING
PROCEDE POUR PRODUIRE DES ROTORS DE TURBINE A GAZ A AUBAGE INTEGRAL PAR SOUDAGE PAR DECHARGE DE CONDENSATEUR

(30) Priorität: 08.08.2003 DE 10336587
(43) Veröffentlichungstag der Anmeldung: 10.05.2006
(73) Patentinhaber: MTU Aero Engines GmbH, 80995 München (DE)
(72) Erfinder: RICHTER, Karl-Hermann, 85229 Markt Indersdorf (DE)
(86) Internationale Anmeldenummer: PCT/DE2004/001654
(87) Internationale Veröffentlichungsnummer: WO 2005/014221

(56) Entgegenhaltungen:
- DE-A- 10 031 137
- FR-A- 2 226 241
- US-A- 2 831 958
- US-A- 3 770 933
- US-A- 4 096 615
- US-A- 4 824 328
- US-A- 5 880 425
- US-B1- 6 193 141

## Beschreibung

Die Erfindung betrifft ein Verfahren zur Herstellung von Gasturbinenrotoren mit integraler

Beschaufelung nach dem Oberbegriff des Patentanspruchs 1 (siehe, z.B., FR-A-2 226 241).

Gasturbinenrotoren mit integraler Beschaufelung bezeichnet man abhängig davon, ob ein scheibenförmiger oder ein ringförmiger Rotor bzw. Rotorträger vorhanden ist, als Blisk oder als Bling. Scheibenförmige Gasturbinenrotoren mit integraler Beschaufelung bezeichnet man als Blisk (Bladed Disk) und ringförmige Gasturbinenrotoren mit integraler Beschaufelung bezeichnet man als Bling (Bladed Ring).

Aus dem Stand der Technik ist es bekannt, Gasturbinenrotoren mit integraler Beschaufelung durch sogenanntes Fräsen aus dem Vollen herzustellen. Das Fräsen aus dem Vollen findet vor allem bei der Herstellung von relativ kleinen Gasturbinenrotoren Verwendung. So eignet sich das Fräsen aus dem Vollen insbesondere für die Serienfertigung von Blisks oder Blings mit relativ kleinen Titan-Schaufelblättern. Das Fräsen von Blisks oder Blings aus einer Nickellegierung ist wegen der schlechten Zerspanbarkeit des Werkstoffs problematisch.

Zudem offenbart FR-A-2 226 241 ein Schweißverfahren zur Befestigung von Laufschaufeln an einem Rotorträger mittels elektrischer Widerstandserhitzung der Grenzflächen auf eine Temperatur nahe des Schmelzpunktes. Bei DE 100 31 137 A1 werden analog hierzu mittels eines Widerstandsschweißverfahrens, welches insbesondere ein Kondensatorentladungsverfahren sein kann, Luftleitflügel an einem Rotor positioniert.

US-A- 3,770,933 zeigt ein Verfahren um Verbinden stumpf gefügter Laufschaufeln an einen Rotorträger mittels Widerstandsschweißen. Dabei werden die Laufschaufeln magnetisch fixiert.

US-A-4,096,615 offenbart ein Verfahren zur Herstellung von Rotoren mit integraler Beschaufelung, bei dem Laufschaufeln mit einen konvergent zulaufenden Schaufelfuß in eine entsprechende Form aufweisende Vertiefungen am Rotorträger eingelötet werden.

Ein weiteres aus dem Stand der Technik bekanntes Verfahren zur Herstellung von Gasturbinenrotoren mit integraler Beschaufelung ist das Anfügen von fertigen Laufschaufeln an den Rotorträger bzw. die Nabe durch sogenanntes lineares Reibschweißen, welches auch als Linear Friction Welding bezeichnet wird. Beim linearen Reibschweißen ist eines der zu fügenden Teile fest eingespannt, während das andere Teil linear oszilliert und mit Druck auf das fest eingespannte Teil gepresst wird. Die Reibung erwärmt den Bereich der Schweißzone auf Schmiedetemperatur und durch den Druck entsteht eine Schweißwulst im Fügebereich. Bei der Herstellung von relativ großen Gasturbinenrotoren bzw. von Gasturbinenrotoren mit relativ großen Schaufelblättern ist das lineare Reibschweißen wirtschaftlicher und kostengünstiger als das Fräsen aus dem Vollen.

Hiervon ausgehend liegt der vorliegenden Erfindung das Problem zu Grunde, ein neuartiges Verfahren zur Herstellung von Gasturbinenrotoren mit integraler Beschaufelung anzugeben, mit dem eine bessere Verbindung zwischen Schaufelfuß und Rotor herbeigeführt werden kann, ohne dass die aufzubringende Kraft erhöht werden muss.

Dieses Problem wird dadurch gelöst, dass das eingangs genannte Verfahren durch die Merkmale des kennzeichnenden Teils des Patentanspruchs 1 weitergebildet ist.

Erfindungsgemäß wird der Schaufelfuß derart angepasst, dass der Schaufelfuß in einem der beim Kondensator-Entladungs-Schweißen der Kontaktierung von Rotor und Schaufelfuß dienenden Bereich zumindest abschnittsweise im Querschnitt V-förmig ausgebildet ist, und Verdickungen und/oder Materialüberstände und/oder Schweißkerben auf Endkontur des Rotors abgearbeitet werden.

Nach einer vorteilhaften Weiterbildung der Erfindung weist der verwendete Schaufelfuß in einem Bereich, der zwischen dem Schaufelblatt und dem im Querschnitt V-förmig ausgebildeten Bereich angeordnet ist, einen zur Presskrafteinleitung angepassten Querschnitt auf. Vorzugsweise verfügt der verwendete Schaufelfuß zur Presskrafteinleitung über mindestens einen in Längsrichtung des Schaufelfußes verlaufenden Vorsprung oder mindestens eine in Längsrichtung verlaufende Nut.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig. 1:: eine Laufschaufel für Gasturbinenrotoren verwendet in einem ersten Ausführungsbeispiel des erfindungsgemäßen Verfahrens in einer schematisierten, perspektivischen Seitenansicht;
- Fig. 2:: einen Ausschnitt aus der Laufschaufel gemäß Fig. 1 im Querschnitt;
- Fig. 3:: die Laufschaufel gemäß Fig. 1 in Draufsicht;
- Fig. 4:: eine Laufschaufel für Gasturbinenrotoren verwendet in einem zweiten Ausführungsbeispiel des erfindungsgemäßen Verfahrens in einer Ansicht analog zu Fig. 3;
- Fig. 5:: eine Laufschaufel für Gasturbinenrotoren verwendet in einem dritten Ausführungsbeispiel des erfindungsgemäßen Verfahrens in einer Ansicht analog zu Fig. 3 und 4;
- Fig. 6:: eine Laufschaufel für Gasturbinenrotoren verwendet in einem vierten Ausführungsbeispiel des erfindungsgemäßen Verfahrens in einer schematisierten, perspektivischen Seitenansicht; und
- Fig. 7:: einen Ausschnitt eines Gasturbinenrotors mit einer nach dem erfindungsgemäßen Verfahren an den Gasturbinenrotor gefügten, Laufschaufel im schematisierten Querschnitt.

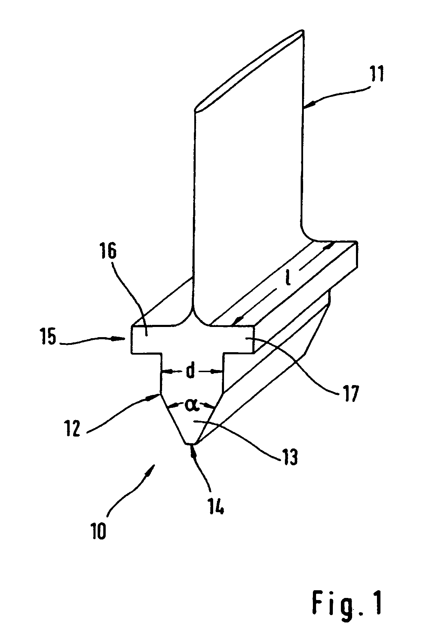

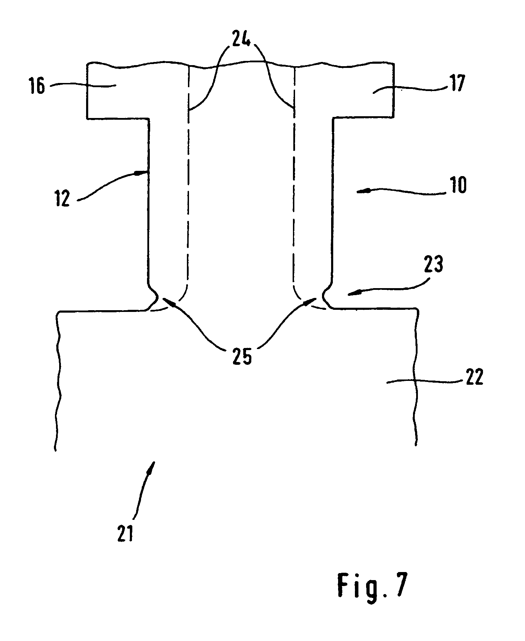

Die vorliegende Erfindung wird nachfolgend unter Bezugnahme auf Fig. 1 bis 7 in größerem Detail beschrieben. Fig. 1 bis 6 zeigen Laufschaufeln für Gasturbinenrotoren zur erfindungsgemäßen Herstellung von Gasturbinenrotoren mit integraler Beschaufelung. Fig. 7 zeigt einen Ausschnitt aus einem Gasturbinenrotor mit einer an den Gasturbinenrotor gefügten Laufschaufel, wobei die Anordnung gemäß Fig. 7 nicht den endgültigen Gasturbinenrotor zeigt, sondern lediglich ein Zwischenprodukt bei der Herstellung desselben.

Im Sinne der hier vorliegenden Erfindung wird vorgeschlagen, Gasturbinenrotoren mit integraler Beschaufelung dadurch herzustellen, dass die Laufschaufeln für sich getrennt hergestellt werden und dass anschließend die hergestellten Laufschaufeln an einen Rotorträger gefügt werden. Das Fügen der Laufschaufeln an den Rotorträger zur Herstellung eines Gasturbinenrotors mit integraler Beschaufelung erfolgt im Sinne der hier vorliegenden Erfindung durch Kondensator-Entladungs-Schweißen, insbesondere durch Kondensator-Entladungs-Pressschweißen.

Bevor auf die einzelnen Verfahrensschritte zur Herstellung von Gasturbinenrotoren mit integraler Beschaufelung im Detail eingegangen wird, sollen nachfolgend die Details der Laufschaufel beschrieben werden, die erfindungsgemäß an das Kondensator-Entladungs-Schweißen, nämlich das Kondensator-Entladungs-Pressschweißen, angepasst ist.

Fig. 1 zeigt eine Laufschaufel 10 in einer perspektivischen Seitenansicht, die an eine Herstellung von Gasturbinenrotoren mit integraler Beschaufelung mittels Kondensator-Entladungs-Pressschweißen angepasst ist. Die Laufschaufel 10 gemäß Fig. 1 verfügt über ein Schaufelblatt 11 und einen sich an das Schaufelblatt 11 anschließenden Schaufelfuß 12. Der Schaufelfuß 12 ist zur erfindungsgemäßen Herstellung eines Gasturbinenrotors mit integraler Beschaufelung mithilfe des Kondensator-Entladungs-Pressschweißen derart angepasst, dass der Schaufelfuß 12 zumindest abschnittsweise im Querschnitt V-förmig ausgebildet ist. So kann Fig. 1 entnommen werden, dass der Schaufelfuß 12 in einem unteren, vom Schaufelblatt 11 abgewandten Bereich 13 im Querschnitt V-förmig ausgebildet ist.

Dieser V-förmige Bereich 13 dient beim Kondensator-Entladungs-Pressschweißen der Kontaktierung der Laufschaufel 10 mit einem nicht-dargestellten, scheibenförmigen oder ringförmigen Rotor bzw. Rotorträger. Beim Kontaktieren der Laufschaufel 10 mit dem Rotor bzw. Rotorträger berührt demnach die Laufschaufel 10 den Rotor mit einem spitz zusammenlaufenden Ende 14 des V-förmigen Bereichs 13. Ausgehend vom spitz zusammenlaufenden Ende 14 des Bereichs 13 erweitert sich derselbe zum Schaufelblatt 10 hin, bis er die Breite d des Schaufelfußes 12 aufweist und in diesen übergeht. Wie Fig. 1 entnommen werden kann, erstreckt sich der V-förmige Bereich 13 über die gesamte Länge I der Laufschaufel 10 bzw. des Schaufelblatts 11. Wie ebenfalls Fig. 1 entnommen werden kann, wird der V-förmige Bereich 13 im Querschnitt durch einen Öffnungswinkel α bestimmt. Der Öffnungswinkel α beträgt vorzugsweise in etwa 70°.

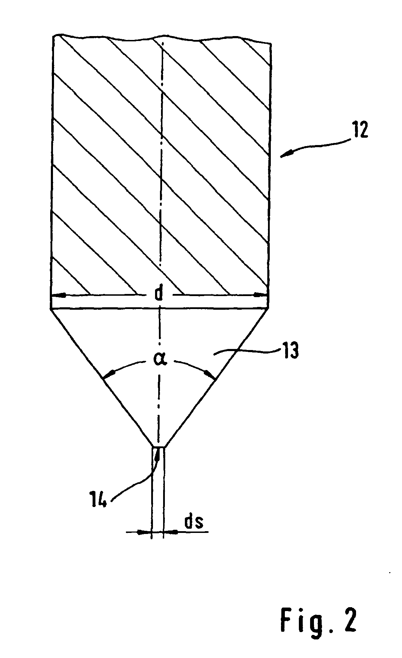

Wie insbesondere Fig. 2 entnommen werden kann, die einen Querschnitt durch den Schaufelfuß 12 und den V-förmigen Bereich 13 zeigt, bildet das spitz zusammenlaufende Ende 14 des V-förmigen Bereichs 13 einen Stumpf mit einer definierten Breite ds, die vorzugsweise im Bereich von weniger als 1 cm, vorzugsweise 0,1 cm liegt.

Fig. 1 kann entnommen werden, dass die Laufschaufel 10 in einem Bereich 15, der zwischen dem im Querschnitt V-förmig ausgebildeten Bereich 13 und dem Schaufelblatt 11 angeordnet ist, einen zur Presskrafteinleitung beim Kondensator-Entladungs-Pressschweißen angepassten Querschnitt aufweist. Gemäß Fig. 1 verfügt die erfindungsgemäße Laufschaufel 10 hierzu zu beiden Seiten über jeweils einen Vorsprung 16 bzw. 17. Die Vorsprünge 16 und 17 erstrecken sich in Längsrichtung des Schaufelfußes 12 über die gesamte Länge I desselben. Die Vorsprünge 16 und 17 bilden Schultern, über welche die beim Kondensator-Entladungs-Pressschweißen erforderliche Presskraft sicher und definiert mithilfe eines an den Vorsprüngen 16 und 17 formschlüssig angreifenden Werkzeugs eingebracht werden kann.

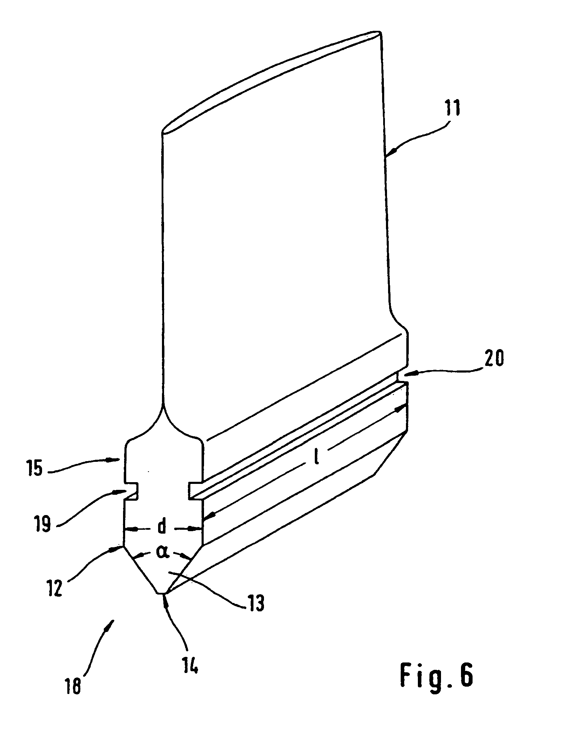

Fig. 6 zeigt eine Laufschaufel 18 für ein alternatives Ausführungsbeispiel der hier vorliegenden Erfindung. Die Laufschaufel 18 gemäß Fig. 6 entspricht im Wesentlichen der Laufschaufel 10 gemäß Fig. 1. Daher werden für gleiche Baugruppen gleiche Bezugsziffern verwendet. Die Laufschaufel 18 gemäß Fig. 6 unterscheidet sich von der Laufschaufel 10 gemäß Fig. 1 lediglich dadurch, dass zur Presskrafteinleitung keine Vorsprünge vorhanden sind, sondern vielmehr Nuten 19 und 20. Die Nuten 19 und 20 erstrecken sich wiederum zu beiden Seiten des Schaufelfußes 12 bzw. der Laufschaufel 10 über die gesamte Länge I derselben, wobei zu jeder Seite des Schaufelblatts 11 bzw. Schaufelfußes 12 jeweils eine derartige Nut 19 bzw. 20 verläuft. In die Nuten 19 und 20 kann ein Werkzeug formschlüssig eingreifen, um die beim Kondensator-Entladungs-Pressschweißen erforderliche Presskraft sicher und definiert bereitzustellen.

An dieser Stelle sei darauf hingewiesen, dass selbstverständlich auch Laufschaufeln für das erfindungsgemäße Verfahren verwendbar sind, die weder die Vorsprünge 16 und 17 noch die Nuten 19 und 20 aufweisen. So ist es möglich, dass die Laufschaufel im Bereich 15 zwischen dem Schaufelblatt 11 und dem im Querschnitt V-förmig ausgebildeten Bereich 13 eine Querschnittsfläche aufweist, die dem kraftschlüssigen bzw. reibschlüssigen Einbringen der beim Kondensator-Entladungs-Pressschweißen erforderlichen Presskraft dient. Eine Ausgestaltung der zu verwendenden Laufschaufel mit den Vorsprüngen 16 und 17 bzw. Nuten 19 und 20 zur Presskrafteinleitung ist jedoch bevorzugt.

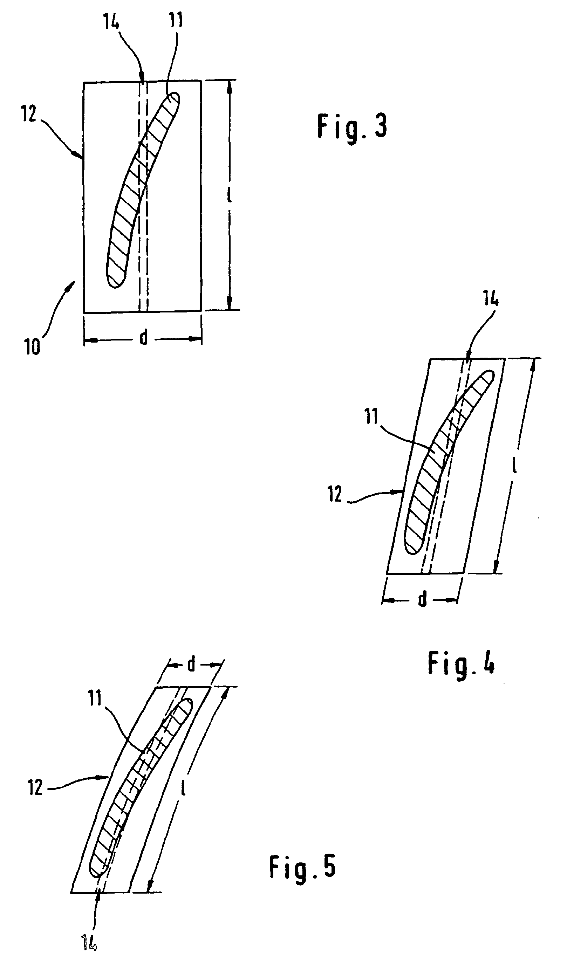

Fig. 3 zeigt stark schematisiert eine Draufsicht auf die Laufschaufel 10 gemäß Fig. 1, wobei zur Verdeutlichung der geometrischen Abmessungen des Schaufelfußes 12 in Fig. 3 auf die Darstellung der Vorsprünge 16 und 17 verzichtet worden ist. So kann Fig. 3 entnommen werden, dass die Laufschaufel 10 gemäß Fig. 1 im Bereich des Schaufelfußes 12 über eine rechteckförmige Grundfläche mit der Länge I und der Breite d verfügt. Das spitz zusammenlaufende Ende 14 des im Querschnitt V-förmigen Bereichs 13 verläuft mittig und parallel zu den Begrenzungen des Schaufelfußes 12. Fig. 4 und 5 zeigen alternative Ausgestaltungen von Laufschaufeln im Bereich des Schaufelfußes 12. So verfügt der Schaufelfuß gemäß Fig. 4 über eine trapezförmige Grundfläche und der Schaufelfuß 12 gemäß Fig. 5 über eine trapezförmige Grundfläche mit gekrümmter, seitlicher Begrenzung. Das spitz zusammenlaufende Ende 14 des im Querschnitt V-förmigen Bereichs 13 verläuft wiederum mittig und parallel zu den seitlichen Begrenzungen des jeweiligen Schaufelfußes 12. Die Ausführungsform gemäß Fig. 4 und 5 verfügt gegenüber der Ausführungsform gemäß Fig. 3 über den Vorteil, dass bei trapezförmig ausgebildeten Grundflächen des Schaufelfußes 12 die Kontur des Schaufelfußes 12 an die Kontur des Schaufelblatts 11 angepasst ist und damit die Grundfläche des Schaufelfußes 12 kleiner ausgelegt werden kann. Hierdurch kann die beim Kondensator-EntladungsSchweißen erforderliche Schweißenergie geringer sein als bei einer rechteckförmigen Grundfläche gemäß Fig. 3.

Wie bereits mehrfach erwähnt, sind die Laufschaufeln für das erfindungsgemäße Verfahren dahingehend angepasst, dass die erfindungsgemäßen Laufschaufeln zur Herstellung von Gasturbinenrotoren mit integraler Beschaufelung durch Kondensator-Entladungs-Pressschweißen angepasst sind. Bei der Herstellung von Gasturbinenrotoren mit integraler Beschaufelung mithilfe des Kondensator-Entladungs-Pressschweißens und der beschriebenen Laufschaufeln wird nach dem erfindungsgemäßen Verfahren wie folgt vorgegangen:

Zuerst werden die Laufschaufeln hergestellt, wie sie zum Beispiel in Fig. 1 bis 6 dargestellt sind. Diese Laufschaufeln verfügen über ein Schaufelblatt und einen sich an das Schaufelblatt anschließenden Schaufelfuß, wobei der Schaufelfuß zumindest abschnittsweise im Querschnitt V-förmig ausgebildet ist. Darauffolgend werden die hergestellten Laufschaufeln mit dem spitz zusammenlaufenden Ende 14 des jeweiligen im Querschnitt V-förmigen Bereichs 13 auf dem Rotor bzw. Rotorträger positioniert, wobei das spitz zusammenlaufende Ende 14 auf einer Mantelfläche des Rotorträgers aufsteht. Die auf dem Rotorträger positionierten Laufschaufeln werden dann an mindestens einen Kondensator angeschlossen. Zum Kondensator-Entladungs-Pressschweißen wird dann der oder jeder Kondensator entladen, wobei hierdurch ein Strom durch den jeweiligen im Querschnitt V-förmig ausgebildeten Bereich 13 des Schaufelfußes 12 fließt und bedingt durch die beim Stromfluss entstehende Wärme das Material von Rotorträger und Schaufelfuß 12 im Bereich 13 zur Bildung einer Schweißfuge auf Schweißtemperatur erwärmt wird. Gleichzeitig wird die erforderliche Presskraft auf die Laufschaufeln 10 eingebracht, wodurch die Laufschaufel 10 zumindest im Bereich 13 gestaucht wird.

Fig. 7 zeigt einen Ausschnitt aus einem Rotor 21, wie er im Anschluss an des Verschweißen einer Laufschaufel 10 mit einem Rotorträger bzw. einer ringförmigen oder scheibenförmigen Nabe 22 vorliegt. Wie Fig. 7 entnommen werden kann, geht der im Querschnitt V-förmige Bereich 13 beim Kondensator-Entladungs-Pressschweißen vollständig in eine Fügezone bzw. Schweißnaht 23 über.

Nachdem die Laufschaufeln mit dem Rotorträger bzw. der Nabe durch Kondensator-Entladungs-Pressschweißen zusammengefügt worden sind, erfolgt eine Endbearbeitung im Übergangsbereich zwischen den Laufschaufeln und der Nabe. Bei dieser Endbearbeitung werden Verdickungen und/oder Materialüberstände und/oder Schweißkerben abgearbeitet, bis die Endkontur des gewünschten Gasturbinenrotors mit integraler Beschaufelung vorliegt. In Fig. 7 ist gestrichelt eine Kontur 24 gezeigt, wie sie im Bereich der Laufschaufeln 10 nach der Endbearbeitung vorliegt. Diese Endbearbeitung kann zum Beispiel durch adaptives Fräsen oder elektrochemische Bearbeitung erfolgen. Beim adaptiven Fräsen wird das Profil des mithilfe des Kondensator-Entladungs-Pressschweißens gefertigten Gasturbinenrotors gemessen und aus einem Vergleich dieses Messwerts mit einem Sollprofil wird ein Steuerungsprogramm zum Fräsen generiert. Unter dem Begriff der elektrochemischen Bearbeitung werden Bearbeitungsverfahren bestanden, bei denen das Prinzip des Materialabtrags auf einer anodischen Materialauflösung während einer Elektrolyse beruht. Die Details der Verfahren zur Endbearbeitung des Gasturbinenrotors sind dem hier angesprochenen Fachmann geläufig.

Wie Fig. 7 zeigt, können sich beim Fügen der Laufschaufeln 10 mit der Nabe 22 Schweißdefekte in Form von Randkerben 25 ausbilden. Auch diese Randkerben werden bei der Endbearbeitung mithilfe des adaptiven Fräsens oder der elektrochemischen Bearbeitung entfernt, so dass ein fehlerfreier, hochpräziser Gasturbinenrotor mit integraler Beschaufelung vorliegt.

In diesem Zusammenhang sei angemerkt, dass dann, wenn beim Fügen mittels Kondensator-Entladungs-Pressschweißen eine Laufschaufel verwendet wird, wie sie in Fig. 6 dargestellt wird, die Tiefe der Nuten 19 und 20 kleiner gewählt werden sollte als die zu erwartende, laterale Ausdehnung der Randkerben 25.

Die durch die Kondensatorentladung bereitgestellte Schweißenergie kann ggf. durch Verwendung zusätzlicher Energiequellen erhöht werden. So kann neben der Kondensatorentladung noch eine induktive Erwärmung der Schweißzone durchgeführt werden.

Mithilfe des Kondensator-Entladungs-Pressschweißens können sowohl Gasturbinenrotoren auf Nickelbasislegierungen als auch auf Titanbasislegierungen hergestellt werden. Bei der Verwendung von Titanbasislegierungen ist es erforderlich, den Schweißbereich von Umgebungsluft abzuschirmen. In diesem Fall erfolgt das Kondensator-Entladungs-Pressschweißen unter Schutzgasatmosphäre in einer entsprechend ausgebildeten Schutzgasglocke.

Beim Kondensator-Entladungs-Pressschweißen sind im Gegensatz zum linearen Reibschweißen keine Höcker auf dem Rotorträger bzw. auf der Nabe erforderlich. Die Laufschaufeln können mit dem spitz zusammenlaufenden Ende 14 des Bereichs 13 unmittelbar auf der Mantelfläche der Nabe positioniert werden. Das Verfahren zur Herstellung der Gasturbinenrotoren mittels Kondensator-Entladungs-Pressschweißen ist kostengünstig und robust. Es verfügt nur über wenige Einstellparameter, wie Kondensatorentladungsenergie, Presskrafteinleitung, Winkel α des V-förmigen Bereichs von Schaufelfuß und die Art und Weise der Kontaktierung des oder jeden zu entladenden Kondensators mit der jeweiligen Laufschaufeln.

Die Kontaktierung für den erforderlichen Stromfluss erfolgt schaufelseitig in Verbindung mit der erforderlichen Presskraft im Bereich des Schaufelfußes der Laufschaufel und nabenseitig in einem Bereich des Rotorträgers, der bei der Herstellung der Endkontur des integral beschaufelten Gasturbinenrotors mechanisch noch nachbearbeitet werden muss.

Ein weiterer Vorteil liegt darin, dass endkonturnahe Laufschaufeln beim Kondensator-Entladungs-Pressschweißen eingesetzt werden können. Die erforderliche Endbearbeitung kann demnach auf ein Minimum reduziert werden. Die Positionierungsgenauigkeit der Laufschaufeln auf der Nabe bzw. dem Rotorträger ist sehr hoch, da im Gegensatz zum linearen Reibschweißen keine Relativbewegung zwischen den Laufschaufeln und der Nabe stattfindet.

## Patentansprüche

1. Verfahren zur Herstellung von Gasturbinenrotoren mit integraler Beschaufelung, wobei mehrere aus Schaufelblatt (11) und daran anschließendem Schaufelfuß (12) bestehende Laufschaufeln (10) auf einem Rotorträger (21), insbesondere auf einer Scheibe oder einem Ring mittels Kondensator-Entladungs-Schweißen befestigt werden, **dadurch gekennzeichnet, dass** der Schaufelfuß (12) derart angepasst wird, dass der Schaufelfuß (12) in einem der beim Kondensator-Entladungs-Schweißen der Kontaktierung von Rotorträger (21) und Schaufelfuß (12) dienenden Bereich (13, 14) zumindest abschnittsweise im Querschnitt V-förmig ausgebildet wird und Verdickungen und/oder Materialüberstände und/oder Schweißkerben auf Endkonturen des Gasturbinenrotors (21) mit integraler Beschaufelung abgearbeitet werden.

2. Verfahren nach Anspruch 1, **dadurch gekennzeichnet, dass** die Laufschaufeln (10) auf dem Rotorträger (21) mittels Kondensator-Entladungs-Pressschweißen befestigt werden.

3. Verfahren nach Anspruch 1, **dadurch gekennzeichnet, dass** Laufschaufeln (10) mit einem spitz zusammenlaufenden Ende des jeweiligen im Querschnitt V-förmigen Bereichs (13, 14) zur Kontaktierung verwendet werden, wobei der Bereich (13, 14) sich ausgehend von dem spitz zusammenlaufendes Ende zum Schaufelblatt (11) hin im Querschnitt erweitert.

4. Verfahren nach Anspruch 1, **dadurch gekennzeichnet, dass** beim Kondensator-Entladungs-Schweißen gleichzeitig eine Presskraft auf die oder jede Laufschaufel (10) eingeleitet wird.

5. Verfahren nach Anspruch 1 bis 4, **dadurch gekennzeichnet, dass** Laufschaufeln (10) mit einem zwischen dem Schaufelblatt (11) und dem im Querschnitt V-förmig ausgebildeten Bereich (13) angeordneten und einen zur Presskrafteinleitung angepassten Querschnitt aufweisenden Bereich verwendet werden.

6. Verfahren nach Anspruch 1 bis 5, **dadurch gekennzeichnet, dass** Laufschaufeln (10) mit einem mindestens einen Vorsprung (16, 17) aufweisenden Schaufelfuß (12) verwendet werden.

7. Verfahren nach Anspruch 6, **dadurch gekennzeichnet, dass** Laufschaufeln (10) mit sich in Längsrichtung des Schaufelfußes (12) erstreckenden Vorsprünge (16, 17) verwendet werden.

8. Verfahren nach Anspruch 6 oder 7, **dadurch gekennzeichnet, dass** Laufschaufeln (10) mit zu beiden Seiten des Schaufelfußes (12) jeweils eine Schulter bildenden Vorsprüngen (16, 17) verwendet werden.

9. Verfahren nach einem der Ansprüche 1 bis 8, **dadurch gekennzeichnet, dass** Laufschaufeln (10) mit einem mindestens eine zur Presskrafteinleitung dienenden Nut (19, 20) aufweisenden Schaufelfuß (12) verwendet werden.

10. Verfahren nach Anspruch 9, **dadurch gekennzeichnet, dass** Laufschaufeln (10) mit sich in Längsrichtung des Schaufelfußes (12) erstreckenden Nuten (19, 20) verwendet werden.

11. Verfahren nach Anspruch 9 oder 10, **dadurch gekennzeichnet, dass** Laufschaufeln (10) mit einem zu beiden Seiten jeweils eine Nut (19, 20) angeordneten Schaufelfuß (12) verwendet werden.

12. Verfahren nach Anspruch 1, **dadurch gekennzeichnet, dass** das Abarbeiten von Verdickungen und/oder Materialüberständen und/oder Schweißkerben durch Fräsen oder durch elektrochemische Bearbeitung erfolgt.

## Claims

1. A method for producing gas turbine rotors with integral blading, wherein a plurality of rotor vanes (10), consisting of a vane blade (11) and a vane base (12) connected thereto, are secured to a rotor-carrier (21), in particular to a disc or a ring by means of capacitor discharge welding, **characterised in that** the vane base (12) is adapted in such a way that the vane base (12) is formed in a V-shaped manner in cross-section at least in sections in a region (13, 14) that is used during the capacitor discharge welding for contacting the rotor-carrier (21) and vane base (12), and thickened portions and/or material excesses and/or welding notches on final contours of the gas turbine rotor (21) with integral blading are worked off.

2. A method according to claim 1, **characterised in that** the rotor vanes (10) are secured to the rotor-carrier (21) by means of capacitor discharge pressure welding.

3. A method according to claim 1, **characterised in that** rotor vanes (10) are used that have a tapering end of the respective region (13, 14) that is V-shaped in cross-section for contacting, with the region (13, 14), starting from the tapering end, widening in cross-section towards the vane blade (11).

4. A method according to claim 1, **characterised in that** during capacitor discharge welding a force of pressure is simultaneously introduced onto the or each rotor vane (10).

5. A method according to claim 1 to 4, **characterised in that** rotor vanes (10) are used that have a region that is arranged between the vane blade (11) and the region (13) formed in a V-shaped manner in cross-section and has a cross-section that is adapted for the introduction of pressure force.

6. A method according to claim 1 to 5, **characterised in that** rotor vanes (10) are used that have a vane base (12) having at least one projection (16, 17).

7. A method according to claim 6, **characterised in that** rotor vanes (10) are used that have projections (16, 17) extending in the longitudinal direction of the vane base (12).

8. A method according to claim 6 or 7, **characterised in that** rotor vanes (10) are used that have projections (16, 17) forming a respective shoulder on both sides of the vane base (12).

9. A method according to one of claims 1 to 8, **characterised in that** rotor vanes (10) are used that have a vane base (12) having at least one groove (19, 20) that is used for the introduction of pressure force.

10. A method according to claim 9, **characterised in that** rotor blades (10) are used that have grooves (19, 20) extending in the longitudinal direction of the vane base (12).

11. A method according to claim 9 or 10, **characterised in that** rotor vanes (10) are used that have a vane base (12) arranged *[sic]* on both sides a respective groove (19, 20).

12. A method according to claim 1, **characterised in that** thickened portions and/or material excesses and/or welding notches are worked off by milling or by electrochemical processing.

## Revendications

1. Procédé pour fabriquer des rotors de turbine à gaz à aubage intégral, selon lequel plusieurs aubes (10) composées d'une lame d'aube (11) et d'un pied d'aube (12) qui lui est raccordé, sont fixées sur un support de rotor (21), en particulier un anneau ou un disque par soudage par décharge de condensateur,
**caractérisé en ce que**
le pied d'aube (12) est adapté de manière à présenter dans une zone (13, 14) servant à assurer le contact du support de rotor (21) et du pied d'aube (12) lors du soudage par décharge de condensateur, au moins localement une section transversale en forme de V, et des épaississements et/ou des parties de matière en saillie et/ou des entailles de soudure sur les contours finaux du rotor de turbine à gaz à aubage intégral sont retirés.

2. Procédé selon la revendication 1,
**caractérisé en ce que**
les aubes (10) sont fixées sur le support de rotor (21) par soudage sous pression par décharge de condensateur.

3. Procédé selon la revendication 1,
**caractérisé en ce qu'**
on utilise des aubes (10) avec pour le contact une extrémité convergeant en pointe dans une zone (13, 14) à section transversale en forme de V, qui va en s'élargissant de l'extrémité en pointe vers la lame d'aube (11).

4. Procédé selon la revendication 1,
**caractérisé en ce que**
lors de l'opération de soudage par décharge de condensateur, une force de pression est appliquée sur la ou sur chaque aube (10).

5. Procédé selon une des revendications 1 à 4,
**caractérisé en ce qu'**
on utilise des aubes (10) sur lesquelles, entre la lame d'aube (11) et la zone (13) à section transversale en forme de V, se trouve une zone présentant une section transversale adaptée à l'introduction d'une force de pression.

6. Procédé selon une des revendications 1 à 5,
**caractérisé en ce qu'**
on utilise des aubes (10) dont le pied (12) présente au moins une saillie (16, 17).

7. Procédé selon la revendication 6,
**caractérisé en ce qu'**
on utilise des aubes (10) avec des saillies (16, 17) s'étendant dans la direction longitudinale du pied d'aube (12).

8. Procédé selon la revendication 6 ou 7,
**caractérisé en ce qu'**
on utilise des aubes (10) présentant chacune, d'un côté et de l'autre du pied d'aube (12), une saillie (16, 17) formant épaulement.

9. Procédé selon une des revendications 1 à 8,
**caractérisé en ce qu'**
on utilise des aubes (10) avec un pied d'aube (12) présentant au moins une rainure (19, 20) servant à introduire la force de pression.

10. Procédé selon la revendication 9,
**caractérisé en ce que**
on utilise des aubes (10) avec des rainures (19, 20) s'étendant dans la direction longitudinale du pied d'aube (12).

11. Procédé selon la revendication 9 ou 10,
**caractérisé en ce qu'**
on utilise des aubes (10) avec d'un côté et de l'autre du pied d'aube (12) une rainure (19, 20).

12. Procédé selon la revendication 1,
**caractérisé en ce que**
l'enlèvement des épaississements et/ou des parties de matière en saillie et/ou des entailles de soudure est effectué par fraisage ou par usinage électrochimique.
